# EUROPEAN PATENT SPECIFICATION

(11) **EP 4 431 794 B1**
(45) Date of publication and mention of the grant of the patent: **19.08.2026**
(21) Application number: 22891944.5
(22) Date of filing: 07.11.2022
(51) Int. Cl.: F21S 41/00, F21S 41/141, F21S 41/16, F21V 21/00, F21V 8/00, F21Y 115/10, F21W 103/10, F21W 104/00, B60Q 1/26, F21S 43/14, F21S 43/15, B60R 13/04, F21S 43/237, F21S 43/245, F21S 43/235, F21S 43/20, F21S 43/31, F21S 45/50, B60R 19/50

(54) **THROUGH LAMP FOR VEHICLE AND VEHICLE HAVING SAME**
DURCHLICHT FÜR FAHRZEUG UND FAHRZEUG DAMIT
LAMPE TRAVERSANTE POUR VÉHICULE ET VÉHICULE EN ÉTANT ÉQUIPÉ

(30) Priority: 10.11.2021 CN 202122749537 U
(43) Date of publication of application: 18.09.2024
(73) Proprietor: Beijing Chehejia Automobile Technology Co., Ltd., Beijing 101300 (CN)
(72) Inventor: WEI, Yun, Beijing 101300 (CN); HAO, Ge, Beijing 101300 (CN); LI, Yu, Beijing 101300 (CN)
(74) Representative: Maiwald GmbH
(86) International application number: PCT/CN2022/130431
(87) International publication number: WO 2023/083150

(56) References cited:
- EP-A1- 2 508 384
- EP-A1- 3 825 601
- CN-A- 111 637 418
- CN-U- 210 485 572
- CN-U- 210 740 285
- CN-U- 211 780 836
- CN-U- 212 777 180
- CN-U- 213 840 820
- CN-U- 216 814 034
- DE-A1- 102005 060 400
- DE-A1- 102017 006 440
- DE-A1- 102018 005 317
- JP-A- 2019 036 512
- US-A- 3 514 589
- US-B1- 7 585 095

## Description

### FIELD

The present invention relates to the field of automobile technologies, and in particular to a through lamp for a vehicle and a vehicle having the same.

### BACKGROUND

A through lamp generally extends along a width direction of a vehicle, linking the left and right lamps of the vehicle, and its shape is continuous, which may not only serve as a position lamp, but also serve as an appearance part to enhance an upscale feeling of the whole vehicle. In the related art, the through lamp that extends along the width direction of the vehicle has a large weight. In order to fix the through lamp more firmly, the through lamp needs to be coupled to a sheet metal member of the vehicle with higher strength, and a part of the through lamp coupled to the sheet metal member requires to have higher structural strength, which results in a limitation on an mounting position of the through lamp, and simultaneously, a high harm value of the through lamp to human body when a collision occurs.

CN213840820U discloses an elongated rear position lamp comprising a mask having a light transmitting portion.

JP2019036512A provides a light guide plate arranged in a back space of a front lens so as to oppose a light emission part of the lens. The light guide plate is divided into a first light guide part and a second light guide part. A light shielding part 81 is arranged so as to shield a clearance between the light guide parts. An LED is arranged behind the first light guide part. Illumination LEDs are arranged at sideways of the first light guide part and the second light guide part. A region of the lens opposing the first light guide part emits light by the light of the LED. Regions of the lens opposing the light guide parts emit light as illumination lamps by the light of the LEDs.

DE102005060400A1 discloses a vehicle tailgate with a wiper cover comprising a lamp.

### SUMMARY

The present invention is intended to solve at least one of the problems in the related art to at least some extent.

For this purpose, embodiments of the present invention propose a through lamp for a vehicle, which combines functions of an exterior trim panel and a through lamp, is lightweight and cost-effective, and simultaneously, has minor harm to human body when a collision occurs.

The invention is set out in the appended set of claims.

According to a first aspect of the present invention, there is provided a through lamp for a vehicle. The through lamp includes an exterior trim panel provided with a light-transmitting area; an mounting bracket arranged on an inner surface of the exterior trim panel, a lamp chamber being defined between the mounting bracket and the inner surface of the exterior trim panel; and a light-emitting assembly arranged in the lamp chamber. Light emitted by the light-emitting assembly is emitted outwards through the light-transmitting area.

The through lamp for the vehicle of embodiments of the present invention combines functions of the exterior trim panel and the through lamp. Compared with a separate arrangement of the through lamp and the exterior trim panel in the related art, the through lamp is lightweight and cost-effective. In addition, compared with the through lamp in the related art with a large weight that must be mounted on a sheet metal of the vehicle, the through lamp in embodiments of the present invention has a flexible mounting position, and simultaneously, the through lamp causes minor harm to human body when the collision occurs.

Optionally, the light-emitting assembly includes a light source and a light guiding member, and the light guiding member is configured to guide the light emitted by the light source to the light-transmitting area.

Optionally, the light guiding member is a reflecting mirror, and the reflecting mirror is adapted to reflect the light of the light source to the light-transmitting area.

Optionally, the reflecting mirror is coupled to the mounting bracket, the light source is mounted at an upper side of the reflecting mirror, and the light-transmitting area is located at a lower side of the light source meanwhile. The light emitted by the light source is reflected to the light-transmitting area located at the lower side of the light source by the reflecting mirror.

Optionally, the light guiding member is a light guide, and the light source is arranged at at least one end of the light guide. The light guide is provided with a light guiding tooth configured to emit the light in the light guide towards an outside of the light guide.

Optionally, a plurality of light guides are provided, the plurality of light guides are spaced apart, and the light source is arranged at at least one end of any one of the plurality of light guides.

Optionally, the light source is arranged at a junction of any two light guides of the plurality of light guides.

Optionally, the light guide includes a first light guide and a second light guide are spaced apart along a left and right direction, and the first light guide and the second light guide extend substantially along the left and right direction. A second end of the first light guide is coupled to a first end of the second light guide, the second end of the first light guide has a first bending portion bent inwards, and the first end of the second light guide has a second bending portion bent inwards. The light source is arranged at an inner side of the first bending portion and the second bending portion. A part of the light emitted by the light source propagates towards a left and right extended part of the first light guide via the first bending portion, and emits towards an outside of the first light guide at the light guiding tooth. Another part of the light emitted by the light source propagates towards a left and right extended part of the second light guide via the second bending portion, and emits towards an outside of the second light guide at the light guiding tooth.

Optionally, the light-emitting assembly includes a reflecting rack and a light source. The reflecting rack has a reflecting groove with an opening facing the light-transmitting area, and the reflecting groove is configured to reflect the light emitted by the light source in a direction of the opening of the reflecting groove. The light source is arranged away from an end of the opening of the reflecting rack. A groove bottom of the reflecting groove defines a through hole, and the light emitted by the light source emits from the through hole towards the light-transmitting area.

Optionally, the exterior trim panel is provided with a non-light-transmitting area, and the non-light-transmitting area includes at least one of an opaque PP plate, an opaque PC plate, and an opaque PMMA plate. The light-transmitting area includes at least one of a transparent PP plate, a transparent PC plate, and a transparent PMMA plate.

Optionally, the light-emitting assembly includes a plurality of light sources, and the plurality of light sources are arranged spaced apart from each other in the lamp chamber.

Optionally, the through lamp for the vehicle also includes a lamp body and an external lens. The lamp body and the external lens are arranged in the lamp chamber and coupled to each other to form a closed cavity, the light-emitting assembly is arranged in the closed cavity, and the light of the light-emitting assembly emits towards the light-transmitting area via the external lens.

Optionally, a sealing member is arranged between the external lens and the inner surface of the exterior trim panel, and the sealing member extends along a circumference of the light-transmitting area and is enclosed in one circle to form a sealing cavity together with the external lens and the exterior trim panel.

According to a second aspect of the present invention, there is provided a vehicle having a through lamp for a vehicle as described in any of the above embodiments.

### BRIEF DESCRIPTION OF THE DRAWINGS

FIG. 1 is a sectional schematic diagram of a through lamp for a vehicle according to an embodiment of the present invention.
FIG. 2 is a sectional schematic diagram of a through lamp for a vehicle according to another embodiment of the present invention.
FIG. 3 is a sectional schematic diagram of a through lamp for a vehicle according to yet another embodiment of the present invention.

Reference signs:
through lamp 100 for vehicle;
exterior trim panel 1;
inner surface 11;
light-transmitting area 12;
non-light-transmitting area 13;
mounting bracket 2;
lamp chamber 21;
light-emitting assembly 3;
light source 31;
reflecting mirror 32;
first light guide 33; first bending portion 331;
second light guide 34; second bending portion 341;
reflecting rack 35;
reflecting groove 351; through hole 352;
lamp body 4;
closed cavity 41;
external lens 5;
sealing member 6.

### DETAILED DESCRIPTION

Embodiments of the present invention are described in detail below, and examples of embodiments are illustrated in accompanying drawings. Embodiments described below with reference to the accompanying drawings are illustrative and are intended to be used to explain the present invention, and cannot be understood as limitation of the present invention.

A through lamp 100 for a vehicle in embodiments of the present invention includes an exterior trim panel 1, a mounting bracket 2, and a light-emitting assembly 3. The exterior trim panel 1 is provided with a light-transmitting area 12. The mounting bracket 2 is arranged at an inner surface 11 of the exterior trim panel 1, and a lamp chamber 21 is defined between the mounting bracket 2 and the inner surface 11 of the exterior trim panel 1. The light-emitting assembly 3 is arranged in the lamp chamber 21, and the light emitted by the light-emitting assembly 3 is emitted outwards through the light-transmitting area 12.

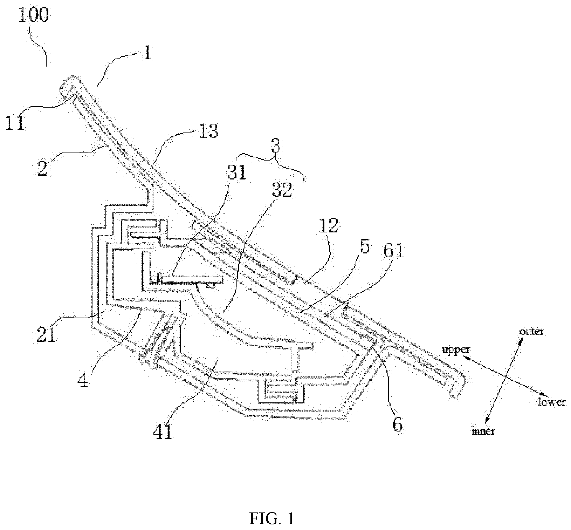

Specifically, as illustrated in FIG. 1, the mounting bracket 2 is mounted at the inner side of the exterior trim panel 1, the mounting bracket 2 defines a groove, and the exterior trim panel 1 closes the groove and forms the lamp chamber 21. The exterior trim panel 1 is provided with the light-transmitting area 12, and the light-emitting assembly 3 is arranged inside the lamp chamber 21. The light emitted by the light-emitting assembly 3 is emitted to the outside through the light-transmitting area 12.

In embodiments of the present invention, it should be understood that the meaning of the exterior trim panel is a component that constitute an outline of the vehicle. According to the present invention, the exterior trim panel is a wiper cover panel. The through lamp for the vehicle in embodiments of the present invention not only may serve as a position lamp but also eliminates a lampshade of a traditional through lamp by mounting the mounting bracket and the light-emitting assembly on the exterior trim panel of the vehicle, which is thereby lightweight and cost-effective.

By reducing weight, embodiments of the present invention need not necessarily be mounted on a sheet metal with high structural strength, and have a more flexible mounting position. In addition, embodiments of the present invention need not use a high-strength connector to support its weight, and causes minor harm to human body when the collision occurs. It should be noted that the present invention does not limit mounting and coupling manners between the mounting bracket 2 and the exterior trim panel 1. For example, the mounting bracket 2 and the exterior trim panel 1 may be coupled by a screw, or may be coupled by coupling manners of welding, riveting, adhering, or snap-fit.

In some embodiments, the light-emitting assembly 3 includes a light source 31 and a light guiding member, and the light guiding member is configured to guide the light emitted by the light source 31 to the light-transmitting area 12. In this way, the light source may guide the light emitted by the light source to the light-transmitting area without directly facing the light-transmitting area when mounted in the lamp chamber, thereby facilitating flexible arrangement of the light source in the lamp chamber.

It should be noted that embodiments of the present invention does not limit the type of the light source. For example, the light source may be an LED lamp or a laser lamp.

In some embodiments, the light guiding member is a reflecting mirror 32, and the reflecting mirror 32 is adapted to reflect the light of the light source 31 to the light-transmitting area 12.

Specifically, as illustrated in FIG. 1, the reflecting mirror 32 is coupled to the mounting bracket 2, the light source 31 is mounted at an upper side of the reflecting mirror 32, and the light-transmitting area 12 is located at a lower side of the light source. The light emitted by the light source 31 is reflected by the reflecting mirror 32 to the light-transmitting area 12 located at the lower side of the light source 31. In this way, when the light-transmitting area is made of a transparent material, only the light reflected by the reflecting mirror may be seen from the outside of the through lamp, and the light source and a circuit coupled to the light source cannot be seen. Therefore, the uniformity of the light emitted from the light-transmitting area may be improved.

It may be understood that the light source 31 may also be arranged at the lower side of the reflecting mirror 32, and the light-transmitting area 12 is located at the upper side of the light source 31. At this time, the light emitted by the light source is reflected by the reflecting mirror to the light-transmitting area located at the upper side of the light source.

In some embodiments, the light guiding member is a light guide, and the light source 31 is arranged at at least one end of the light guide. The light guide is provided with a light guiding tooth, and the light guiding tooth is configured to emit the light in the light guide towards an outside of the light guide.

Specifically, the light guide (not illustrated) extends in a left and right direction orthogonal to an upper and lower direction and an inner and outer direction, and the light guiding tooth is (not illustrated) arranged at an inner side of the light guide. An end of the light guide is provided with the light source 31, and the light emitted by the light source 31 may be propagated in the left and right direction along an inner wall of the light guide and emitted towards the outside of the light guide at the light guiding tooth. In this way, only arranging the light source at the end of the light guide may completely illuminate the light-transmitting area.

It should be noted that the light source 31 may be arranged at one end of the light guide or at two ends of the light guide, which is not limited in the present invention.

In some embodiments, a plurality of light guides are provided, the plurality of light guides are spaced apart, and the light source 31 is arranged at at least one end of any one of the plurality of light guides.

Specifically, the light guide includes the plurality of light guides coupled end to end and extend in the left and right direction, and the light source 31 is arranged at a junction of any two light guides of the plurality of light guides. The light emitted by the light source 31 is extended in the left and right direction via the inner wall of the light guide and emitted towards the outside of the light guide at the light guiding tooth. In this way, short light guides may be used for splicing to achieve the light guidance effect of a long light guide.

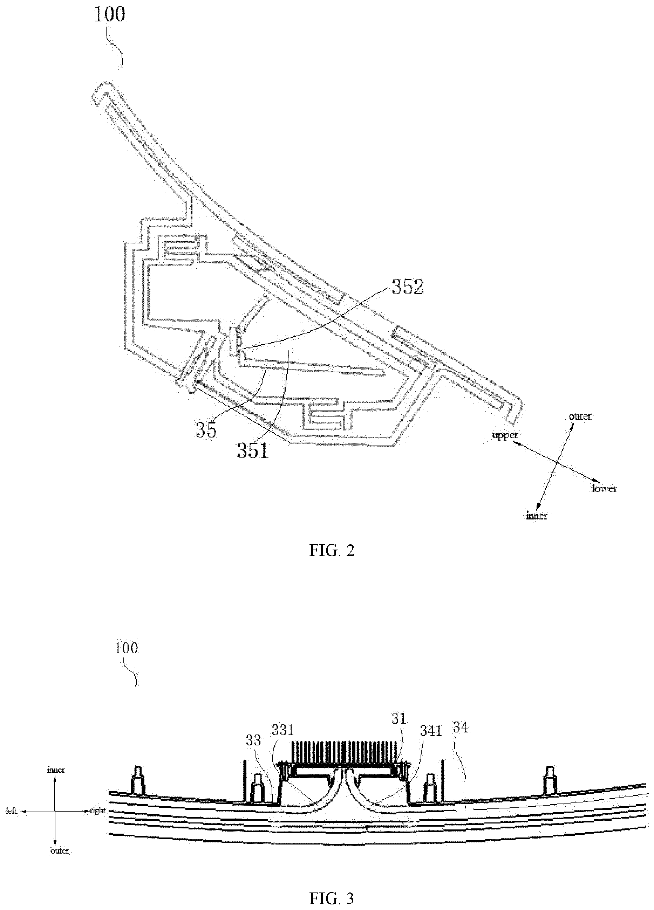

Furthermore, as illustrated in FIG. 3, the light guide includes a first light guide 33 and a second light guide 34 spaced apart along the left and right direction. The first light guide 33 and the second light guide 34 extend substantially along the left and right direction. A second end of the first light guide 33 is coupled to a first end of the second light guide 34. The second end of the first light guide 33 has a first bending portion 331 bent inwards, and the first end of the second light guide 34 has a second bending portion 341 bent inwards. The light source 31 is arranged at an inner side of the first bending portion 331 and the second bending portion 341. A part of the light emitted by the light source 31 propagates towards a left and right extended part of the first light guide 33 via the first bending portion 331, and emits towards an outside of the first light guide 33 at the light guiding tooth. Another part of the light emitted by the light source 31 propagates towards a left and right extended part of the second light guide 34 via the second bending portion 341, and emits towards an outside of the second light guide 34 at the light guiding tooth. In this way, the light emitted by the light source may be emitted towards the light-transmitting area through the light guide, and the uniformity of the light may be improved.

In some embodiments, the light-emitting assembly 3 includes a reflecting rack 35 and the light source 31. The reflecting rack 35 has a reflecting groove 351 with an opening facing the light-transmitting area, and the reflecting groove 351 is configured to reflect the light emitted by the light source 31 in a direction of the opening of the reflecting groove 351. The light source 31 is arranged away from an end of the opening of the reflecting rack 35. A groove bottom of the reflecting groove 351 defines a through hole 352, and the light emitted by the light source 31 is emitted from the through hole 352 towards the light-transmitting area 12.

Specifically, as illustrated in FIG. 2, the light-emitting assembly 3 includes the reflecting rack 35 and the light source 31. The reflecting rack 35 is located at the inner side of the light-transmitting area 12, and the reflecting rack 35 has the reflecting groove 351 with the opening facing the outside. The groove bottom of the reflecting groove 351 defines the through hole 352, and the light source 31 is arranged in the through hole 352. A part of the light emitted by the light source 31 emits from the through hole 352 to the light-transmitting area 12 located at the outside, and another part of the light emitted by the light source 31 is reflected to the light-transmitting area 12 by a side wall of the reflecting groove 351. Therefore, the reflecting rack may improve the brightness of the illumination of the light source towards the light-transmitting area.

In some embodiments, the exterior trim panel 1 is provided with a non-light-transmitting area 13, and the non-light-transmitting area 13 includes at least one of an opaque PP plate, an opaque PC plate, and an opaque PMMA plate. The light-transmitting area 12 includes at least one of a transparent PP plate, a transparent PC plate, and a transparent PMMA plate.

It should be noted that embodiments of the present invention does not limit the coupling between the light-transmitting area and the non-light-transmitting area. For example, the light-transmitting area and the non-light-transmitting area may be integrally formed by double-shot moulding to achieve the coupling between the light-transmitting area and the non-light-transmitting area. The light-transmitting area and the non-light-transmitting area may also be coupled by welding, or may also be bonded by an adhesive material, a hot melting coupling and a snap-fit.

It may be understood that the light-transmitting area 12 and the non-light-transmitting area 13 may also be achieved through laser carving process after painting on the transparent PP plate.

In some embodiments, the light-emitting assembly 3 includes a plurality of light sources 31, and the plurality of light sources are spaced apart from each other in the lamp chamber.

Specifically, the plurality of light sources light sources 31 are spaced apart along the left and right direction, and the light emitted by the plurality of light sources 31 is emitted outwards through the light-transmitting area 12. In this way, the weight of the through lamp is lighter by omitting the light guiding member.

In some embodiments, the through lamp 100 for the vehicle further includes a lamp body 4 and an external lens 5. The lamp body 4 and the external lens 5 are arranged in the lamp chamber 21 and coupled to each other to form a closed cavity 41. The light-emitting assembly 3 is arranged in the closed cavity 41 and the light of the light-emitting assembly 3 is emitted towards the light-transmitting area 12 via the external lens 5.

Specifically, as illustrated in FIGS. 1 and 2, the through lamp 100 for the vehicle further includes the lamp body 4 and the external lens 5. The lamp body 4 is coupled to the mounting bracket 2, and the lamp body 4 defines a lamp groove with an opening outwards. The external lens 5 is arranged at an outer side of the lamp body 4, and fitted with the lamp body 4 to seal the lamp groove to form the closed cavity 41. The light-emitting assembly 3 is arranged in the closed cavity 41. The light of the light-emitting assembly 3 is emitted towards the light-transmitting area via the external lens 5. In this way, the lamp chamber and the closed cavity may form two layers of sealing for the light-emitting assembly, and the through lamp has a high waterproof effect.

Furthermore, a sealing member 6 is arranged between the external lens 5 and the inner surface 11 of the exterior trim panel 1. The sealing member 6 extends along a circumference of the light-transmitting area 12 and is enclosed in one circle to form a sealing cavity 61 together with the external lens 5 and the exterior trim panel 1. In this way, it may prevent water vapor from entering the sealing cavity when water vapor enters the lamp chamber, ensuring that the light of the light-emitting assembly is not disturbed during propagation.

Embodiments of the present invention also provide a vehicle. The vehicle includes a through lamp, and the through lamp is a through lamp 100 for the vehicle in any of the above embodiments.

Compared with the related art, the vehicle in embodiments of the present invention is lightweight and cost-effective, and simultaneously, the vehicle has minor harm to a pedestrian when the collision occurs, resulting in a higher safety.

In the description of the present invention, it should be understood that orientations or position relationships indicated by terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" , etc. are based on the orientations or position relationships illustrated in the accompanying drawings, and are only for convenience of describing the present invention and simplifying the description, rather than indicating or implying that devices or components referred to must have a particular orientation, be constructed and operated in the particular orientation. Therefore, it cannot be understood as a limitation on the present invention.

In addition, terms "first" and "second" are only used to describe the purpose and cannot be understood as indicating or implying relative importance or implying the quantity of technical features indicated. Therefore, features limited to "first" and "second" may explicitly or implicitly include at least one of these features. In the description disclosed herein, "a plurality of" means at least two, such as two, three, etc., unless otherwise specified with specific limitations.

In the present invention, unless otherwise specified and limited, terms "mount", "couple", "connect", "fix" and other terms should be broadly understood. For example, they may be a fixed connection, a detachable connection, or integrated. They may also be a mechanical connection, an electrical connection or communication with each other. They may be directly coupled or indirectly coupled through an intermediate medium. They may be an internal connection of two components or an interaction relationship between two components, unless otherwise specified. For ordinary those skilled in the art, specific meanings of the above terms in the present invention may be understood based on specific cases.

In the present invention, unless otherwise specified and limited, the first feature is "above" or "below" the second feature, which means that the first feature may be in direct contact with the second features, or the first feature may be in indirect contact with the second features through an intermediate media. Moreover, if the first feature is "on", "above" and "on top of" the second feature, which means that the first feature is directly or diagonally above the second feature, or simply indicates that the first feature is horizontally higher than the second feature. The first feature is "under", "below" and "on bottom of" the second feature, which means that the first feature is directly or diagonally below the second feature, or simply indicates that the horizontal height of the first feature is less than that of the second feature.

In the present invention, terms "an embodiment", "some embodiments", "an example", "a specific examples", or "some examples" means that a specific feature, structure, material, or characteristic described in connection with embodiments or examples is included in at least one embodiment or example of the present invention. In this specification, the illustrative expressions of the above terms do not necessarily refer to the same embodiments or examples. Moreover, the specific feature, structure, material, or characteristic described may be combined in any suitable manner in one or more embodiments or examples. In addition, those skilled in the art may connect and combine different embodiments or examples as well as features of different embodiments or examples described in this specification, without conflicting with each other.

## Claims

1. A through lamp (100) for a vehicle, comprising:
an exterior trim panel (1) provided with a light-transmitting area (12);
a mounting bracket (2) arranged on an inner surface (11) of the exterior trim panel (1), a lamp chamber (21) being defined between the mounting bracket (2) and the inner surface (11) of the exterior trim panel (1);
a light-emitting assembly (3) arranged in the lamp chamber (21), wherein light emitted by the light-emitting assembly (3) is emitted outwards through the light-transmitting area (12),
**characterized in that** the exterior trim panel (1) is a wiper cover panel.

2. The through lamp (100) for the vehicle according to claim 1, wherein the light-emitting assembly (3) comprises a light source (31) and a light guiding member, and the light guiding member is configured to guide the light emitted by the light source (31) to the light-transmitting area (12).

3. The through lamp (100) for the vehicle according to claim 2, wherein the light guiding member is a reflecting mirror (32), and the reflecting mirror (32) is adapted to reflect the light of the light source (31) to the light-transmitting area (12).

4. The through lamp (100) for the vehicle according to claim 3, wherein the reflecting mirror (32) is coupled to the mounting bracket (2), the light source (31) is mounted at an upper side of the reflecting mirror (32), the light-transmitting area (12) is located at a lower side of the light source (31) meanwhile, and the light emitted by the light source (31) is reflected to the light-transmitting area (12) located at the lower side of the light source (31) by the reflecting mirror (32).

5. The through lamp (100) for the vehicle according to claim 2, wherein the light guiding member is a light guide, the light source (31) is arranged at at least one end of the light guide, the light guide is provided with a light guiding tooth arranged at an inner side of the light guide, the light emitted by the light source (31) is propagated along an inner wall of the light guide and emitted towards an outside of the light guide at the light guiding tooth.

6. The through lamp (100) for the vehicle according to claim 5, wherein a plurality of light guides are provided, the plurality of light guides are spaced apart, and the light source (31) is arranged at a junction of any two light guides of the plurality of light guides.

7. The through lamp (100) for the vehicle according to claim 6, wherein the light guide comprises a first light guide (33) and a second light guide (34) spaced apart along a left and right direction, and the first light guide (33) and the second light guide (34) extend substantially along the left and right direction; a second end of the first light guide (33) is coupled to a first end of the second light guide (34), the second end of the first light guide (33) has a first bending portion (331) bent inwards, and the first end of the second light guide (34) has a second bending portion (341) bent inwards; and the light source (31) is arranged at an inner side of the first bending portion (331) and the second bending portion (341), a part of the light emitted by the light source (31) propagates towards a left and right extended part of the first light guide (33) via the first bending portion (331), and emits towards an outside of the first light guide (33) at the light guiding tooth, and another part of the light emitted by the light source (31) propagates towards a left and right extended part of the second light guide (34) via the second bending portion (341), and emits towards an outside of the second light guide (34) at the light guiding tooth.

8. The through lamp (100) for the vehicle according to any one of claims 1-7, wherein the light-emitting assembly (3) comprises a reflecting rack (35) and a light source (31), the reflecting rack (35) has a reflecting groove (351) with an opening facing the light-transmitting area (12), the reflecting groove (351) is configured to reflect the light emitted by the light source (31) in a direction of the opening of the reflecting groove (351), the light source (31) is arranged away from an end of the opening of the reflecting rack (35), a groove bottom of the reflecting groove (351) defines a through hole (352), and the light emitted by the light source (31) emits from the through hole (352) towards the light-transmitting area (12).

9. The through lamp (100) for the vehicle according to any one of claims 1-8, wherein the exterior trim panel (1) is provided with a non-light-transmitting area (13), the non-light-transmitting area (13) comprises at least one of an opaque PP plate, an opaque PC plate, and an opaque PMMA plate, and the light-transmitting area (12) includes at least one of a transparent PP plate, a transparent PC plate, and a transparent PMMA plate.

10. The through lamp (100) for the vehicle according to any one of claims 1-9, wherein the light-emitting assembly (3) comprises a plurality of light sources (31), and the plurality of light sources (31) are spaced apart from each other in the lamp chamber (21).

11. The through lamp (100) for the vehicle according to any one of claims 1-10, further comprising a lamp body (4) and an external lens (5), wherein the lamp body (4) and the external lens (5) are arranged in the lamp chamber (21) and coupled to each other to form a closed cavity (41), the light-emitting assembly (3) is arranged in the closed cavity (41), and the light of the light-emitting assembly (3) is emitted towards the light-transmitting area (12) via the external lens (5).

12. The through lamp (100) for the vehicle according to claim 11, wherein a sealing member (6) is arranged between the external lens (5) and the inner surface (11) of the exterior trim panel (1), and the sealing member (6) extends along a circumference of the light-transmitting area (12) and is enclosed in one circle to form a sealing cavity (61) together with the external lens (5) and the exterior trim panel (1).

13. A vehicle, comprising a through lamp (100) according to any one of claims 1-12.

## Patentansprüche

1. Durchlichtleuchte (100) für ein Fahrzeug, umfassend:
eine Außenverkleidungsplatte (1), die mit einem lichtdurchlässigen Bereich (12) versehen ist;
einer Befestigungshalterung (2), die an einer Innenfläche (11) der Außenverkleidungsplatte (1) angeordnet ist, wobei zwischen der Befestigungshalterung (2) und der Innenfläche (11) der Außenverkleidungsplatte (1) eine Leuchtenkammer (21) gebildet ist;
eine in der Leuchtenkammer (21) angeordnete licht-emittierende Einheit (3), wobei das von der licht-emittierenden Einheit (3) emittierte Licht durch den lichtdurchlässigen Bereich (12) nach außen abgestrahlt wird,
**dadurch gekennzeichnet, dass** die Außenverkleidungsplatte (1) eine Scheibenwischerabdeckung ist.

2. Durchgangsleuchte (100) für das Fahrzeug nach Anspruch 1, wobei die licht-emittierende Einheit (3) eine Lichtquelle (31) und ein Lichtleitelement umfasst und das Lichtleitelement so ausgebildet ist, dass es das von der Lichtquelle (31) emittierte Licht zum lichtdurchlässigen Bereich (12) leitet.

3. Durchlichtleuchte (100) für das Fahrzeug nach Anspruch 2, wobei das Lichtleitelement ein Reflektorspiegel (32) ist und der Reflektorspiegel (32) dazu ausgelegt ist, das Licht der Lichtquelle (31) zum lichtdurchlässigen Bereich (12) zu reflektieren.

4. Durchlichtleuchte (100) für das Fahrzeug nach Anspruch 3, wobei der Reflektorspiegel (32) mit der Befestigungshalterung (2) verbunden ist, die Lichtquelle (31) an einer Oberseite des Reflektorspiegels (32) angebracht ist, der lichtdurchlässige Bereich (12) sich unterdessen an einer Unterseite der Lichtquelle (31) befindet, und das von der Lichtquelle (31) emittierte Licht durch den Reflektorspiegel (32) zum lichtdurchlässigen Bereich (12) reflektiert wird, der sich an der Unterseite der Lichtquelle (31) befindet.

5. Durchlichtleuchte (100) für das Fahrzeug nach Anspruch 2, wobei das Lichtleitelement ein Lichtleiter ist, die Lichtquelle (31) an mindestens einem Ende des Lichtleiters angeordnet ist, der Lichtleiter mit einem an seiner Innenseite angeordneten Lichtleitzahn versehen ist, das von der Lichtquelle (31) emittierte Licht entlang einer Innenwand des Lichtleiters weitergeleitet und an dem Lichtleitzahn in Richtung einer Außenseite des Lichtleiters emittiert wird.

6. Durchlichtleuchte (100) für das Fahrzeug nach Anspruch 5, wobei mehrere Lichtleiter vorgesehen sind, die mehreren Lichtleiter voneinander beabstandet sind und die Lichtquelle (31) an einer Verbindungsstelle von jeweils zwei beliebigen Lichtleitern der mehreren Lichtleiter angeordnet ist.

7. Durchgangsleuchte (100) für das Fahrzeug nach Anspruch 6, wobei der Lichtleiter einen ersten Lichtleiter (33) und einen zweiten Lichtleiter (34) umfasst, die entlang einer Links-Rechts-Richtung voneinander beabstandet sind, und der erste Lichtleiter (33) und der zweite Lichtleiter (34) sich im Wesentlichen entlang der Links-Rechts-Richtung erstrecken, ein zweites Ende des ersten Lichtleiters (33) mit einem ersten Ende des zweiten Lichtleiters (34) verbunden ist, das zweite Ende des ersten Lichtleiters (33) einen ersten, nach innen gebogenen Biegeabschnitt (331) aufweist und das erste Ende des zweiten Lichtleiters (34) einen zweiten, nach innen gebogenen Biegeabschnitt (341) aufweist, und die Lichtquelle (31) an einer Innenseite des ersten Biegeabschnitts (331) und des zweiten Biegeabschnitts (341) angeordnet ist, wobei sich ein Teil des von der Lichtquelle (31) emittierten Lichts über den ersten Biegeabschnitt (331) in Richtung eines sich nach links und rechts erstreckenden Abschnitts des ersten Lichtleiters (33) ausbreitet, und an dem Lichtleitzahn nach außen aus dem ersten Lichtleiter (33) austritt, und ein weiterer Teil des von der Lichtquelle (31) emittierten Lichts sich über den zweiten Biegeabschnitt (341) in Richtung der nach links und rechts verlaufenden Verlängerungen des zweiten Lichtleiters (34) ausbreitet und an dem Lichtleitzahn nach außen aus dem zweiten Lichtleiter (34) austritt.

8. Durchlichtleuchte (100) für das Fahrzeug gemäß einem der Ansprüche 1 bis 7, wobei die lichtemittierende Einheit (3) eine Reflektorleiste (35) und eine Lichtquelle (31) umfasst, die Reflektorleiste (35) eine Reflektorrille (351) mit einer dem lichtdurchlässigen Bereich (12) zugewandten Öffnung aufweist, die Reflektorrille (351) so ausgebildet ist, dass sie das von der Lichtquelle (31) emittierte Licht in Richtung der Öffnung der Reflektorrille (351) reflektiert, die Lichtquelle (31) von einem Ende der Öffnung des Reflektorleiste (35) entfernt angeordnet ist, ein Rillenboden der Reflektorrille (351) ein Durchgangsloch (352) festlegt, und das von der Lichtquelle (31) emittierte Licht aus dem Durchgangsloch (352) in Richtung des lichtdurchlässigen Bereichs (12) austritt.

9. Durchlichtleuchte (100) für das Fahrzeug nach einem der Ansprüche 1 bis 8, wobei die Außenverkleidungsplatte (1) mit einem lichtundurchlässigen Bereich (13) versehen ist, wobei der lichtundurchlässige Bereich (13) mindestens eine undurchsichtige PP-Platte, eine undurchsichtige PC-Platte oder eine undurchsichtige PMMA-Platte umfasst und der lichtdurchlässige Bereich (12) mindestens eine transparente PP-Platte, eine transparente PC-Platte oder eine transparente PMMA-Platte umfasst.

10. Durchlichtleuchte (100) für das Fahrzeug gemäß einem der Ansprüche 1 bis 9, wobei die lichtemittierende Einheit (3) mehrere Lichtquellen (31) umfasst und die mehreren Lichtquellen (31) in der Leuchtenkammer (21) voneinander beabstandet sind.

11. Durchlichtleuchte (100) für das Fahrzeug gemäß einem der Ansprüche 1 bis 10, die ferner einen Leuchtenkörper (4) und eine Außenlinse (5) umfasst, wobei der Leuchtenkörper (4) und die Außenlinse (5) in der Leuchtenkammer (21) angeordnet und miteinander verbunden sind, um einen geschlossenen Hohlraum (41) zu bilden, die lichtemittierende Einheit (3) in dem geschlossenen Hohlraum (41) angeordnet ist und das Licht der lichtemittierenden Einheit (3) über die Außenlinse (5) in Richtung des lichtdurchlässigen Bereichs (12) abgestrahlt wird.

12. Durchlichtleuchte (100) für das Fahrzeug nach Anspruch 11, wobei zwischen der Außenlinse (5) und der Innenfläche (11) der Außenverkleidungsplatte (1) ein Dichtungselement (6) angeordnet ist, und das Dichtungselement (6) sich entlang eines Umfangs des lichtdurchlässigen Bereichs (12) erstreckt und in einem Kreis umschlossen ist, um zusammen mit der Außenlinse (5) und der Außenverkleidungsplatte (1) einen Dichtungshohlraum (61) zu bilden.

13. Fahrzeug, das eine Durchlichtleuchte (100) gemäß einem der Ansprüche 1 bis 12 umfasst.

## Revendications

1. Lampe traversante (100) pour un véhicule, comprenant :
un panneau d'habillage extérieur (1) pourvu d'une zone de transmission de lumière (12) ;
un support de montage (2) agencé sur une surface intérieure (11) du panneau d'habillage extérieur (1), une chambre de lampe (21) étant définie entre le support de montage (2) et la surface intérieure (11) du panneau d'habillage extérieur (1) ;
un ensemble luminescent (3) agencé dans la chambre de lampe (21), dans laquelle la lumière émise par l'ensemble luminescent (3) est émise vers l'extérieur à travers la zone de transmission de lumière (12),
**caractérisée en ce que** le panneau d'habillage extérieur (1) est un panneau de cache d'essuie-glace.

2. Lampe traversante (100) pour le véhicule selon la revendication 1, dans laquelle l'ensemble luminescent (3) comprend une source de lumière (31) et un organe de guidage de lumière, et l'organe de guidage de lumière est configuré pour guider la lumière émise par la source de lumière (31) vers la zone de transmission de lumière (12).

3. Lampe traversante (100) pour le véhicule selon la revendication 2, dans laquelle l'organe de guidage de lumière est un miroir réfléchissant (32), et le miroir réfléchissant (32) est adapté pour réfléchir la lumière de la source de lumière (31) vers la zone de transmission de lumière (12).

4. Lampe traversante (100) pour le véhicule selon la revendication 3, dans laquelle le miroir réfléchissant (32) est couplé au support de montage (2), la source de lumière (31) est montée au niveau d'un côté supérieur du miroir réfléchissant (32), la zone de transmission de lumière (12) est située au niveau d'un côté inférieur de la source de lumière (31) entre-temps, et la lumière émise par la source de lumière (31) est réfléchie vers la zone de transmission de lumière (12) située au niveau du côté inférieur de la source de lumière (31) par le miroir réfléchissant (32).

5. Lampe traversante (100) pour le véhicule selon la revendication 2, dans laquelle l'organe de guidage de lumière est un guide de lumière, la source de lumière (31) est agencée à au moins une extrémité du guide de lumière, le guide de lumière est pourvu d'une dent de guidage de lumière agencée au niveau d'un côté intérieur du guide de lumière, la lumière émise par la source de lumière (31) est propagée le long d'une paroi intérieure du guide de lumière et émise vers un côté extérieur du guide de lumière au niveau de la dent de guidage de lumière.

6. Lampe traversante (100) pour le véhicule selon la revendication 5, dans laquelle une pluralité de guides de lumière sont prévus, la pluralité de guides de lumière sont espacés, et la source de lumière (31) est agencée au niveau d'une jonction de deux guides de lumière quelconques de la pluralité de guides de lumière.

7. Lampe traversante (100) pour le véhicule selon la revendication 6, dans laquelle le guide de lumière comprend un premier guide de lumière (33) et un second guide de lumière (34) espacés le long d'une direction gauche et droite, et le premier guide de lumière (33) et le second guide de lumière (34) s'étendent sensiblement le long de la direction gauche et droite ; une seconde extrémité du premier guide de lumière (33) est couplée à une première extrémité du second guide de lumière (34), la seconde extrémité du premier guide de lumière (33) présente une première portion de flexion (331) fléchie vers l'intérieur, et la première extrémité du second guide de lumière (34) présente une seconde portion de flexion (341) fléchie vers l'intérieur ; et la source de lumière (31) est agencée au niveau d'un côté intérieur de la première portion de flexion (331) et de la seconde portion de flexion (341), une partie de la lumière émise par la source de lumière (31) se propage vers une partie étendue gauche et droite du premier guide de lumière (33) via la première portion de flexion (331), et émet vers un côté extérieur du premier guide de lumière (33) au niveau de la dent de guidage de lumière, et une autre partie de la lumière émise par la source de lumière (31) se propage vers une partie étendue gauche et droite du second guide de lumière (34) via la seconde portion de flexion (341), et émet vers un côté extérieur du second guide de lumière (34) au niveau de la dent de guidage de lumière.

8. Lampe traversante (100) pour le véhicule selon l'une quelconque des revendications 1-7, dans laquelle l'ensemble luminescent (3) comprend un support réfléchissant (35) et une source de lumière (31), le support réfléchissant (35) présente une rainure réfléchissante (351) avec une ouverture orientée vers la zone de transmission de lumière (12), la rainure réfléchissante (351) est configurée pour réfléchir la lumière émise par la source de lumière (31) dans une direction de l'ouverture de la rainure réfléchissante (351), la source de lumière (31) est agencée à l'écart d'une extrémité de l'ouverture du support réfléchissant (35), un fond de rainure de la rainure réfléchissante (351) définit un trou traversant (352), et la lumière émise par la source de lumière (31) émet à partir du trou traversant (352) vers la zone de transmission de lumière (12).

9. Lampe traversante (100) pour le véhicule selon l'une quelconque des revendications 1-8, dans laquelle le panneau d'habillage extérieur (1) est pourvu d'une zone de non-transmission de lumière (13), la zone de non-transmission de lumière (13) comprend au moins l'une parmi une plaque de PP opaque, une plaque de PC opaque, et une plaque de PMMA opaque, et la zone de transmission de lumière (12) comporte au moins l'une parmi une plaque de PP transparente, une plaque de PC transparente et une plaque de PMMA transparente.

10. Lampe traversante (100) pour le véhicule selon l'une quelconque des revendications 1-9, dans laquelle l'ensemble luminescent (3) comprend une pluralité de sources de lumière (31), et la pluralité de sources de lumière (31) sont espacées les unes des autres dans la chambre de lampe (21).

11. Lampe traversante (100) pour le véhicule selon l'une quelconque des revendications 1-10, comprenant en outre un corps de lampe (4) et une lentille externe (5), dans laquelle le corps de lampe (4) et la lentille externe (5) sont agencés dans la chambre de lampe (21) et couplés l'un à l'autre pour former une cavité fermée (41), l'ensemble luminescent (3) est agencé dans la cavité fermée (41), et la lumière de l'ensemble luminescent (3) est émise vers la zone de transmission de lumière (12) via la lentille externe (5).

12. Lampe traversante (100) pour le véhicule selon la revendication 11, dans laquelle un organe d'étanchéité (6) est agencé entre la lentille externe (5) et la surface intérieure (11) du panneau d'habillage extérieur (1), et l'organe d'étanchéité (6) s'étend le long d'une circonférence de la zone de transmission de lumière (12) et est enfermé dans un cercle pour former une cavité d'étanchéité (61) conjointement avec la lentille externe (5) et le panneau d'habillage extérieur (1).

13. Véhicule, comprenant une lampe traversante (100) selon l'une quelconque des revendications 1-12.
